# FASCICULE DE BREVET EUROPEEN

(11) **EP 3 664 996 B1**
(45) Date de publication et mention de la délivrance du brevet: **30.06.2021**
(21) Numéro de dépôt: 18765953.7
(22) Date de dépôt: 10.08.2018
(51) Int. Cl.: B29C 70/22, B29C 70/32, B29C 70/38, B29B 11/16, C04B 35/80, D04H 1/74, D04H 1/76, D04H 3/073, D04H 5/10, F02K 1/38, F02K 1/48, B29L 23/00, C04B 35/01, C04B 35/76, C04B 35/82

(54) **PROCÉDÉ DE FABRICATION D'UNE STRUCTURE FIBREUSE TUBULAIRE À LOBES**
VERFAHREN ZUR HERSTELLUNG EINER ROHRFÖRMIGEN FASERIGEN STRUKTUR MIT LAPPEN
METHOD OF MANUFACTURING A TUBULAR FIBROUS STRUCTURE WITH LOBES

(30) Priorité: 10.08.2017 FR 1757637
(43) Date de publication de la demande: 17.06.2020
(73) Titulaire: Safran Nacelles, 76700 Gonfreville-l'Orcher (FR)
(72) Inventeur: DESJOYEAUX, Bertrand, 76700 Gonfreville l'Orcher (FR); SILVA DE VASCONCELLOS, Davi, 76700 Gonfreville l'Orcher (FR); PROVOST, Benjamin, 76700 Gonfreville l'Orcher (FR)
(74) Mandataire: Delorme, Nicolas
(86) Numéro de dépôt international: PCT/FR2018/052058
(87) Numéro de publication internationale: WO 2019/030462

(56) Documents cités:
- FR-A1- 2 651 717
- GB-A- 2 484 349

## Description

La présente divulgation se rapporte à une structure fibreuse circulaire à lobes, ainsi qu'à une pièce tubulaire à lobes incorporant cette structure fibreuse.

Une telle pièce peut être utilisée notamment dans l'aéronautique : un exemple d'une telle pièce est un mixeur de flux destiné à équiper le bord de fuite d'une tuyère de turboréacteur à double flux, séparant les flux d'air chaud et froid, afin de favoriser le mélange de ces flux afin d'augmenter la poussée et de réduire les émissions sonores.

Un tel mixeur de flux présente sensiblement une symétrie axiale autour de l'axe principal du turboréacteur, et comporte typiquement en amont (par rapport au sens d'écoulement de l'air) une virole circulaire, et en aval des lobes qui s'accroissent jusqu'au bord de fuite.

Dans la technique antérieure, un tel mixeur de flux peut être obtenu à partir d'une pluralité de nappes de fibres tissées qui se chevauchent au moins en partie, ce qui nécessite des découpages multiples (et donc de nombreuses chutes) et une mise en œuvre complexe à la main.

De surcroît, le chevauchement des différentes nappes engendre un surpoids, ainsi que des imperfections aérodynamiques, ce qui est préjudiciable en termes de consommation de carburant et d'acoustique.

De manière alternative, un tel mixeur de flux peut être réalisé par tissage contour, c'est-à-dire grâce à un tissu de fibres que l'on enroule autour d'un mandrin de forme correspondant à celle du mixeur, avant de l'enrouler sur un outil reproduisant la forme du mixeur.

Un tel procédé permet notamment d'obtenir, sur la pièce finale, des fibres présentant une orientation bien déterminée par rapport à l'axe de la pièce.

Toutefois, lorsqu'on veut mettre en œuvre un tel procédé de tissage contour notamment avec un tissu de fibres en céramique, il faut utiliser des fibres en céramique de section réduite, dites « à bas titre », dont le coût est très élevé, et les choix d'orientation des fibres sont limités à ceux compatibles avec les métiers à tisser.

On rencontre ce problème avec d'autres fibres, telles que des fibres en polymères, ou des fibres métalliques.

La présente divulgation vise à fournir un mixeur à fibres notamment en céramique nécessitant peu d'interventions manuelles lors de sa fabrication, et moins onéreux.

Le document FR 2 651 717 A1 décrit un procédé de fabrication d'une structure fibreuse tubulaire à lobes.

La présente divulgation fournit une structure fibreuse circulaire à lobes, remarquable en ce qu'elle est formée d'un seul tenant d'une structure fibreuse non-tissée sur au moins deux lobes, la structure fibreuse comprenant au moins un groupe de fibres présentant une même orientation par rapport à l'axe de ladite structure.

Dans le cadre de la présente divulgation le terme « circulaire » ou « tubulaire » doit s'entendre comme une structure s'étendant sur une partie ou sur la totalité d'une circonférence.

Grâce aux caractéristiques de la structure fibreuse on peut s'affranchir de la mise en œuvre d'une pluralité de nappes de fibres comme c'était le cas dans l'état de la technique, et ainsi gagner en rapidité de mise en oeuvre, en coût, et en performances en vol.

De plus, l'utilisation d'une structure fibreuse non-tissée comprenant au moins un groupe de fibres présentant une même orientation par rapport à l'axe de la structure fibreuse (on désignera ces fibres par « unidirectionnelles »), permet de maîtriser complètement les chemins d'effort à l'intérieur de la structure, et ainsi d'optimiser la conception de la pièce finale, notamment en termes de poids, tout en offrant une alternative moins onéreuse par rapport à l'utilisation de fibres tissées.

On peut ainsi par exemple utiliser des fibres oxyde 20 000 deniers, qui sont difficilement tissables.

Suivant d'autres caractéristiques optionnelles de la structure fibreuse prises seules ou en combinaison :
- cette structure comprend de deux lobes jusqu'à une pluralité de lobes,
- cette structure comprend des lobes de formes différentes,
- cette structure comprend plusieurs structures non fibreuses non-tissées superposées, partiellement ou en totalité,
- cette structure comprend plusieurs structures fibreuses non-tissées juxtaposées,
- cette structure comprend des fibres présentant une multitude d'orientations, selon les besoins mécaniques et structuraux,
- lesdites fibres sont choisies dans le groupe comprenant :
   ∘ des fibres en céramique telles que le carbure de silicium, les oxydes d'aluminium, les aluminosilicates,
   ∘ des fibres en polymères tels que polyester, polyamide, polyéthylène,
   ∘ des fibres minérales telles que fibres de verre ou de basalte,
   ∘ des fibres organiques telles que fibres de carbone ou aramide, Kevlar®, et
   ∘ des fibres métalliques,
   étant entendu que toute combinaison de ces fibre est possible.
- cette structure est obtenue par drapage/dépôt des fibres sur un mandrin dont la forme correspond au moins en partie à celle de la pièce finale à réaliser, et sur lequel par exemple un film a été préalablement enroulé de sorte à entourer ledit mandrin.

La présente divulgation se rapporte également à une pièce en composite obtenue à partir d'une structure conforme à ce qui précède.

Suivant d'autres caractéristiques optionnelles de la pièce prises seules ou en combinaison :
- le ou les matériaux formant la matrice desdites fibres est une matrice organique, ou bien une matrice céramique,
- cette pièce comprend des lobes présentant des formes différentes,
- cette pièce comprend des lobes dont les hauteurs et forme sont variables suivant la position axiale,
- les flancs des lobes sont selon des plans ou selon des formes quelconques,
- le périmètre de la pièce dans la zone des lobes est plus grand que la plus petite circonférence de la pièce dans la zone sans lobes,
- la pièce présente une partie ouverte, dans laquelle manque un secteur angulaire.

La présente divulgation se rapporte également à un mixeur de flux pour turboréacteur d'aéronef, remarquable en ce qu'il est formé d'au moins une pièce conforme à ce qui précède.

La présente invention se rapporte à un procédé de fabrication d'une structure fibreuse tubulaire à lobes, dans lequel on drape/dépose des fibres sur un mandrin présentant une forme correspondant à celle de cette structure fibreuse, ce drapage/dépôt étant effectué de sorte qu'au moins un groupe de fibres présente une même orientation par rapport à l'axe de ladite structure fibreuse, puis une fois les fibres ayant été drapées sur un secteur angulaire inférieur à la périphérie totale du mandrin, l'une des extrémités de la structure fibreuse est séparée/décollée du mandrin, afin de permettre la poursuite du drapage sur ce même mandrin.

Cette technique permet à l'automate de drapage de poursuivre la dépose des fibres sur le mandrin de façon continue et permet ainsi d'obtenir une préforme dont la longueur totale est plus importante que la périphérie du mandrin.

Le mandrin présente une forme correspondant à celle de cette structure fibreuse, c'est-à-dire que le mandrin présente une forme correspondant, au moins en partie sur une portion donnée, à celle de la pièce finale à réaliser. En d'autres termes la forme du mandrin est telle que la forme de la préforme drapée dessus s'adapte aussi à la forme de la pièce finale souhaitée.

Par exemple, le mandrin peut présenter la forme exacte de la pièce finale à réaliser. Alternativement, dans une configuration préférée, le mandrin présente une forme réduite qui est agencée de sorte à ce qu'elle corresponde, ou s'adapte, sensiblement à celle d'une portion de la pièce finale souhaitée prise sur un secteur angulaire prédéterminé. Ainsi, si le mandrin est réduit par exemple d'un facteur 4 par rapport à la dimension de la pièce finale à fabriquer, il suffit de poursuivre la dépose des fibres sur le mandrin de façon continue sur quatre tours de mandrin pour obtenir la structure fibreuse adaptée, ceci bien entendu en fonction de la répétition de forme des lobes de la pièce tubulaire à fabriquer, dans la mesure où la formes desdits lobes créée par un tour de mandrin est répétée.

Ceci est particulièrement avantageux, moins couteux et moins encombrant, puisqu'il est possible d'obtenir une préforme dont la longueur totale est plus importante que la périphérie du mandrin. Cela permet également d'utiliser des mandrins identiques pour fabriquer des structures fibreuses de dimensions différentes, en longueur, en largeur, en orientations et dispositions de fibres contenues.

Dans une variante spécifique préférée, le mandrin a une géométrie telle que sa circonférence correspond à la forme d'une portion de structure fibreuse comprenant une zone sensiblement de révolution et une zone formant au moins deux lobes.

En d'autres termes par exemple, pour produire d'un seul tenant une structure fibreuse couvrant tout ou partie d'une pièce circulaire ouverte ou fermée comportant N lobes autour d'un axe longitudinal, ces lobes étant uniformément répartis angulairement autour de l'axe et de forme identique au moins un lobe sur deux (au moins les lobes impairs de forme similaire entre eux et les lobes pairs de forme similaire entre eux), on drape selon l'invention, une préforme continument sur N/2(N divisé par 2) tours d'un mandrin circulaire, ce mandrin étant caractérisé en ce qu'il comporte à une de ses extrémités deux bossages, et en ce que l'ensemble de la surface constituant sa circonférence totale (un tour) corresponde par transposition filaire à la forme de la pièce finale correspondant à un secteur angulaire couvrant deux lobes de celle-ci.

Dans une variante, préalablement à l'étape de dépose/drapage, un film de séparation est appliqué/enroulé, de préférence à forme, sur le mandrin, ce film se trouvant alors entre ledit mandrin et la structure fibreuse lors de la fabrication.

Ce film est séparé du mandrin en même temps que la structure fibreuse sur lequel elle est alors supportée, facilitant le maintien de la cohésion entre fibres parallèles.

De préférence, la longueur de film enroulé sur le mandrin est au moins égale à la dimension, ou longueur totale, de structure fibreuse à fabriquer. Ainsi, par exemple, préalablement à l'étape de dépose/drapage des fibres sur le mandrin, le film est enroulé sur au moins autant de tours autour du mandrin qu'il est souhaité que la structure fibreuse fasse en un seul tenant.

Par exemple, si on veut une préforme qui fasse d'un seul tenant une longueur totale équivalente à 5 tours de mandrins, il est préférable que le film ait été enroulé au préalable en continu sur au moins 5 tours, ainsi, au fur et à mesure que le film est retiré avec la préforme, il y a toujours un film en dessous pour recevoir la suite de la structure fibreuse formant préforme.

La séparation du film et des fibres peut aussi être effectuée ultérieurement, par exemple lors de l'enroulement de la structure fibreuse autour de la forme tubulaire à volutes.

D'autres caractéristiques et avantages de la présente divulgation apparaîtront à la lumière de la description qui va suivre, et à l'examen des figures ci-annexées, dans lequelles :
- la figure 1 représente une vue en perspective d'un mixeur de flux pour turboréacteur,
- la figure 2 représente une vue en perspective d'une partie de la structure fibreuse couvrant deux lobes du mixeur de la figure 1, et
- la figure 3 illustre un procédé de fabrication de la structure fibreuse de la figure 2.

Sur l'ensemble de ces figures, des références identiques ou analogues désignent des organes ou ensembles d'organes identiques ou analogues.

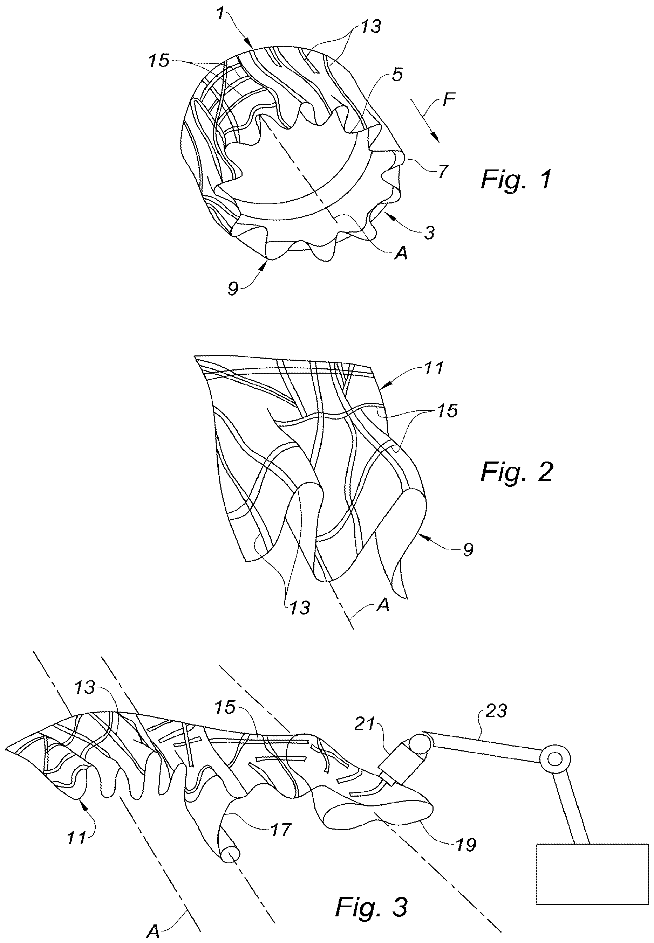

On a représenté, sur la figure 1, un mixeur pour turboréacteur d'aéronef, centré autour d'un axe longitudinal A.

Un tel mixeur comprend typiquement une partie amont 1 (par rapport au sens de l'écoulement de l'air en fonctionnement, indiqué par la flèche F) de section transversale sensiblement circulaire, et une partie aval 3 présentant des creux 5 et des bosses 7, couramment désignés par le terme « lobes » 9.

Un tel mixeur est destiné à être disposé sur le bord de fuite de la tuyère séparant le flux d'air froid du flux d'air chaud d'un turboréacteur d'aéronef à double flux, afin de réaliser un meilleur mélange de ces deux flux, et ainsi d'améliorer les performances acoustiques et de consommation du moteur.

Selon la divulgation ce mixeur est réalisé avec une structure fibreuse 11 plus particulièrement visible sur la figure 2, formée d'une ou plusieurs structures fibreuses non-tissées à fibres notamment en céramique, chaque structure fibreuse non-tissée comprenant au moins un groupe de fibres présentant une même orientation par rapport à l'axe A (les fibres de chaque tel groupe étant désignées par « unidirectionnelles »).

Par « unidirectionnelles », on entend des couches d'ensemble de fibres ou filaments disposés en mèches ou nappes et sensiblement parallèles les uns aux autres.

Sur la figure 2, on peut voir un premier groupe de fibres 13 orientées par rapport à la direction de l'axe A longitudinal, et un deuxième groupe de fibres 15 orientées par rapport à une direction transversale à cet axe.

De préférence, cette structure fibreuse 11 s'étend sur la totalité des lobes du mixeur, en en faisant éventuellement plusieurs tours : de la sorte, on réalise la structure fibreuse du mixeur d'un seul tenant, ce qui évite de découper et superposer partiellement des nappes de structure fibreuse comme c'était le cas dans la technique antérieure.

La structure fibreuse peut comprendre entre deux lobes et jusqu'à une pluralité de lobes ; ces lobes peuvent présenter des formes différentes.

Cette structure fibreuse peut comprendre plusieurs structures fibreuses non-tissées partiellement ou totalement superposées ou juxtaposées les unes par rapport aux autres.

Cette structure fibreuse peut comprendre des fibres présentant une multitude d'orientations, selon les besoins mécaniques et structuraux.

Le ou les matériaux formant lesdites fibres sont choisis notamment dans le groupe comprenant le verre, le basalte, le carbone, le carbure de silicium, les oxydes d'aluminium, les aluminosilicates.

La pièce finale obtenue à partir de cette structure fibreuse comprend une matrice organique, ou bien une matrice céramique.

L'imprégnation de la fibre par la matrice peut être réalisée au niveau d'un ruban unidirectionnel de fibres avant la dépose dans le cas des procédés dit « Pré-imprégnés » et suivi, après enroulement final sur la forme tubulaire à volutes, d'un durcissement par polymérisation, ou dans les cas des matrices céramiques par frittage ou densification.

L'imprégnation par cette matrice peut aussi être complétée ou totalement réalisée après le drapage sur la forme tubulaire à volutes par procédé RTM (Resin Transfer Molding), infusion, et plus généralement par tout procédé permettant de noyer les fibres de la préforme dans une résine apte à durcir par polymérisation, ou dans les cas des matrices céramiques par frittage ou densification.

Le mixeur obtenu avec la structure fibreuse selon la divulgation peut présenter des lobes dont la hauteur est continûment croissante vers l'extrémité aval de la pièce.

Les flancs des lobes peuvent être selon des plans ou selon des formes quelconques.

Le mixeur peut présenter une partie ouverte, dans laquelle manque un secteur angulaire.

On a représenté sur la figure 3, de manière schématique, un procédé de fabrication de la structure fibreuse 11 de la figure 1.

Comme cela est visible sur cette figure, un film 17 a été enroulé sur plusieurs tours autour d'un mandrin d'appel 19.

Ce mandrin est une sorte de bobine de forme particulière correspondant à la forme de la structure fibreuse 11 que l'on souhaite réaliser.

Au moyen d'une tête de dépôt de fibres 21 montée par exemple à l'extrémité du bras 23 d'un robot, on drape/dépose sur le film 17 les fibres présentant les différentes orientations souhaitées par rapport à l'axe A de la pièce finale tubulaire : on obtient de la sorte une structure fibreuse non-tissée composée de fibres unidirectionnelles.

Une fois que les fibres ont été drapées sur un secteur angulaire inférieur à la périphérie totale du mandrin, l'une des extrémités du film 17 est décollée du mandrin libérant la surface du mandrin de la partie de préforme déjà drapée, afin de permettre la poursuite du drapage sur ce même mandrin et à la suite de la préforme fibreuse déjà drapée.

En fonction de la répétition de forme des lobes de la pièce tubulaire, chaque structure fibreuse peut couvrir de 2 lobes ou jusqu'à un tour complet ou plus d'un tour de la pièce tubulaire.

Notamment, si les lobes sont identiques ou si un sur deux sont identiques, on pourra constituer un tour complet au moins de la pièce à lobes avec une même structure fibreuse.

Avant ou après enroulement sur l'outil de moulage dont la forme correspond à celle de la pièce finale, la structure fibreuse 11 peut être imprégnée du matériau destiné à former la matrice du composite avant d'être consolidée de sorte à obtenir la pièce finale, à savoir le mixeur de flux.

S'ensuit la consolidation de la matrice pour rigidifier la pièce.

Bien entendu, la présente divulgation n'est pas limitée au mode de réalisation décrit et représenté, fourni à titre d'exemple illustratif et non limitatif.

Par exemple, un tel mixeur peut être encore utilisé pour mélanger deux flux concentriques dans différents domaines (hydrauliques ou gazeux, sans qu'ils soient nécessairement chauds, mais avec les mêmes soucis de mélange, de coût,...). La structure fibreuse peut être faite de fibres céramiques, organiques (polyester, polyamide, polyéthylène, ...) métalliques, de verre, de basalte, de carbone, de carbure de silicium, d'oxydes d'aluminium, d'aluminosilicates.

## Revendications

1. Procédé de fabrication d'une structure fibreuse tubulaire (11) à lobes (9), dans lequel on drape/dépose des fibres (13, 15) sur un mandrin (19) présentant une forme correspondant à celle de cette structure fibreuse (11), ce drapage/dépôt étant effectué de sorte qu'au moins un groupe de fibres (13, 15) présente une même orientation par rapport à l'axe (A) longitudinal de ladite structure fibreuse (11), le procédé étant **caractérisé en ce que** les fibres ayant été drapées sur un secteur angulaire inférieur à la périphérie totale du mandrin, l'une des extrémités de la structure fibreuse est séparée du mandrin afin de permettre la poursuite du drapage sur ce même mandrin.

2. Procédé de fabrication d'une structure fibreuse tubulaire (11) à lobes (9) selon la revendication 1, **caractérisé en ce que** la circonférence du mandrin correspond à la forme d'une portion de structure fibreuse comprenant une zone de révolution et une zone formant au moins deux lobes.

3. Procédé de fabrication d'une structure fibreuse tubulaire (11) à lobes (9) selon la revendication 1, **caractérisé en ce que** le mandrin présente une forme réduite qui est agencée de sorte à ce qu'elle corresponde, ou s'adapte, sensiblement à celle d'une portion de la pièce finale souhaitée prise sur un secteur angulaire prédéterminé.

4. Procédé de fabrication d'une structure fibreuse tubulaire (11) à lobes (9) selon l'une quelconque des revendications 1 à 3, **caractérisé en ce que**, préalablement à l'étape de dépose/drapage des fibres sur le mandrin, un film de séparation (17) est enroulé sur le mandrin.

5. Procédé de fabrication d'une structure fibreuse tubulaire (11) à lobes (9) selon la revendication précédente, **caractérisé en ce que** le film est séparé du mandrin en même temps que la structure fibreuse sur lequel elle est alors supportée, facilitant le maintien de la cohésion entre fibres parallèles.

6. Procédé de fabrication d'une structure fibreuse tubulaire (11) à lobes (9) selon l'une quelconque des revendications précédentes, **caractérisé en ce qu'**une imprégnation de la fibre par une matrice est réalisée au niveau d'un ruban unidirectionnel de fibres avant la dépose dans le cas des procédés dit « Pré-imprégnés » et suivi, après enroulement final sur la forme tubulaire à volutes, d'un durcissement par polymérisation, ou dans les cas des matrices céramiques par frittage ou densification.

7. Procédé de fabrication d'une structure fibreuse tubulaire (11) à lobes (9) selon la revendication précédente, **caractérisé en ce que** l'imprégnation par cette matrice peut aussi être complétée ou totalement réalisée après le drapage sur la forme tubulaire à volutes par tout procédé permettant de noyer les fibres de la préforme dans une résine apte à durcir par polymérisation.

8. Procédé de fabrication d'une structure fibreuse tubulaire (11) à lobes (9) selon l'une quelconque des revendications 6 ou 7, **caractérisé en ce que** le ou les matériaux formant la matrice desdites fibres (13, 15) est une matrice organique, ou bien une matrice céramique.

9. Procédé de fabrication d'une structure fibreuse tubulaire (11) à lobes (9) selon l'une quelconque des revendications précédentes, **caractérisé en ce qu'**une pièce en composite obtenue à partir de la structure fibreuse (11) présente une partie ouverte, dans laquelle manque un secteur angulaire.

## Patentansprüche

1. Verfahren zur Herstellung einer rohrförmigen faserigen Struktur (11) mit Lappen (9), wobei Fasern (13, 15) auf einem Dorn (19) drapiert/abgelegt werden, der eine Form aufweist, die jener dieser faserigen Struktur (11) entspricht, wobei dieses Drapieren/Ablegen derart ausgeführt wird, dass mindestens eine Fasergruppe (13, 15) eine selbe Ausrichtung in Bezug auf die Längsachse (A) der faserigen Struktur (11) aufweist, wobei das Verfahren **dadurch gekennzeichnet ist, dass**, da die Fasern auf einem Winkelsektor kleiner als die gesamte Peripherie des Dorns drapiert worden sind, eines der Enden der faserigen Struktur vom Dorn getrennt ist, um die Fortsetzung des Drapierens auf diesem selben Dorn zu ermöglichen.

2. Verfahren zur Herstellung einer rohrförmigen faserigen Struktur (11) mit Lappen (9) nach Anspruch 1, **dadurch gekennzeichnet, dass** der Umfang des Dorns der Form eines faserigen Strukturabschnitts entspricht, die eine Umdrehungszone und eine Zone umfasst, die mindestens zwei Lappen bildet.

3. Verfahren zur Herstellung einer rohrförmigen faserigen Struktur (11) mit Lappen (9) nach Anspruch 1, **dadurch gekennzeichnet, dass** der Dorn eine reduzierte Form aufweist, die derart angeordnet ist, dass sie im Wesentlichen jener eines Abschnitts des gewünschten endgültigen Teils entspricht, oder sich diesem anpasst, der in einem vorbestimmten Winkelsektor angenommen wird.

4. Verfahren zur Herstellung einer rohrförmigen faserigen Struktur (11) mit Lappen (9) nach einem der Ansprüche 1 bis 3, **dadurch gekennzeichnet, dass** vor dem Schritt des Drapierens/Ablegens der Fasern auf dem Dorn ein Trennfilm (17) auf dem Dorn aufgerollt wird.

5. Verfahren zur Herstellung einer rohrförmigen faserigen Struktur (11) mit Lappen (9) nach dem vorstehenden Anspruch, **dadurch gekennzeichnet, dass** der Film gleichzeitig von dem Dorn getrennt wird, wie die faserige Struktur auf dem sie getragen wird, wodurch die Beibehaltung des Zusammenhalts zwischen parallelen Fasern erleichtert wird.

6. Verfahren zur Herstellung einer rohrförmigen faserigen Struktur (11) mit Lappen (9) nach einem der vorstehenden Ansprüche, **dadurch gekennzeichnet, dass** eine Imprägnierung der Faser durch eine Matrix im Bereich eines unidirektionalen Bandes an Fasern vor dem Ablegen im Falle der "vorimprägniert" genannten Verfahren realisiert wird, und, nach dem endgültigen Aufrollen auf der rohrförmigen Form mit Spiralen, gefolgt von einer Aushärtung durch Polymerisation, oder in den Fällen der keramischen Matrizen durch Sinterung oder Verdichtung.

7. Verfahren zur Herstellung einer rohrförmigen faserigen Struktur (11) mit Lappen (9) nach dem vorstehenden Anspruch, **dadurch gekennzeichnet, dass** die Imprägnierung durch diese Matrix auch nach dem Drapieren auf der rohrförmigen Form mit Spiralen durch jedes Verfahren abgeschlossen oder vollständig realisiert werden kann, das es ermöglicht, die Fasern der Vorform in ein Harz einzutauchen, das imstande ist, durch Polymerisierung auszuhärten.

8. Verfahren zur Herstellung einer rohrförmigen faserigen Struktur (11) mit Lappen (9) nach einem der Ansprüche 6 oder 7, **dadurch gekennzeichnet, dass** das oder die Materialien, die die Matrix der Fasern (13, 15) bilden, eine organische Matrix, oder aber eine keramische Matrix ist.

9. Verfahren zur Herstellung einer rohrförmigen faserigen Struktur (11) mit Lappen (9) nach einem der vorstehenden Ansprüche, **dadurch gekennzeichnet, dass** ein Teil aus Verbundwerkstoff, das aus der faserigen Struktur (11) erhalten wird, einen offenen Teil aufweist, in dem ein Winkelsektor fehlt.

## Claims

1. A method for manufacturing a tubular fibrous structure (11) with lobes (9), wherein fibers (13, 15) are draped/deposited on a mandrel (19) having a shape corresponding to that of this fibrous structure (11), this draping/deposition being performed such that at least one group of fibers (13, 15) has the same orientation relative to the longitudinal axis (A) of said fibrous structure (11), the method being **characterized in that**
the fibers having been draped over an angular sector less than the total periphery of the mandrel, one end of the fibrous structure is separated from the mandrel in order to allow the continuation of the draping on the same mandrel.

2. The method for manufacturing a tubular fibrous structure (11) with lobes (9) according to claim 1, **characterized in that** the circumference of the mandrel corresponds to the shape of a portion of fibrous structure comprising a zone of revolution and a zone forming at least two lobes.

3. The method for manufacturing a tubular fibrous structure (11) with lobes (9) according to claim 1, **characterized in that** the mandrel has a reduced shape which is arranged such that it corresponds, or is adapted, substantially to that of a portion of the desired final part taken on a predetermined angular sector.

4. The method for manufacturing a tubular fibrous structure (11) with lobes (9) according to any one of claims 1 to 3, **characterized in that**, prior to the step of depositing/draping the fibers on the mandrel, a separation film (17) is wound on the mandrel.

5. The method for manufacturing a tubular fibrous structure (11) with lobes (9) according to the preceding claim, **characterized in that** the film is separated from the mandrel at the same time as the fibrous structure on which it is then supported, facilitating the maintenance of the cohesion between parallel fibers.

6. The method for manufacturing a tubular fibrous structure (11) with lobes (9) according to any one of the preceding claims, **characterized in that** an impregnation of the fiber by a matrix is carried out at a unidirectional tape of fibers before depositing in the case of the methods called « prepreg » methods and followed, after final winding on the tubular form with volutes, by a polymerization curing, or in the case of ceramic matrices by sintering or densification.

7. The method for manufacturing a tubular fibrous structure (11) with lobes (9) according to the preceding claim, **characterized in that** the impregnation by this matrix can also be completed or totally carried out after draping on the tubular form with volutes by any method allowing embedding the fibers of the preform in a resin which is capable of curing by polymerization.

8. The method for manufacturing a tubular fibrous structure (11) with lobes (9) according to any one of claims 6 or 7, **characterized in that** the material(s) forming the matrix of said fibers (13, 15) is an organic matrix, or else a ceramic matrix.

9. The method for manufacturing a tubular fibrous structure (11) with lobes (9) according to any one of the preceding claims, **characterized in that** a composite part obtained from the fibrous structure (11) has an open portion, in which an angular sector is missing.
